# FASCICULE DE BREVET EUROPEEN

(11) **EP 1 812 325 B1**
(45) Date de publication et mention de la délivrance du brevet: **19.08.2009**
(21) Numéro de dépôt: 05791058.0
(22) Date de dépôt: 12.07.2005
(51) Int. Cl.: B65G 67/00

(54) **PROCEDE ET INSTALLATION DE TRAITEMENT AUTOMATIQUE DES BAGAGES**
VERFAHREN UND ANLAGE ZUR AUTOMATISCHEN GEPÄCKHANDHABUNG
METHOD AND INSTALLATION FOR AUTOMATIC LUGGAGE HANDLING

(30) Priorité: 08.10.2004 FR 0410646; 08.10.2004 FR 0410647
(43) Date de publication de la demande: 01.08.2007
(73) Titulaire: Squarcle, 77420 Champs sur Marne (FR)
(72) Inventeur: SAFIR, André, F-92380 Garches (FR)
(74) Mandataire: Bertrand, Didier
(86) Numéro de dépôt international: PCT/FR2005/001804
(87) Numéro de publication internationale: WO 2006/040421

(56) Documents cités:
- DE-A1- 19 637 949
- US-A- 3 655 076
- US-B1- 6 702 542

## Description

La présente invention se rapporte à un procédé et à une installation de traitement automatique des bagages. Une telle installation est enseignée par le DE-A-19 637 949.

Un domaine d'application envisagé est notamment celui du transport aérien pour lequel il est nécessaire de transférer des bagages individuels à main entre un aérogare et la soute d'un avion. Des dispositifs de ce type sont divulgués, par example, dans US-B-6 702 542.

Les bagages sont généralement de forme parallélépipédique et il présente une embase surmontée par deux flancs latéraux opposés espacés d'une distance correspondant à l'épaisseur du bagage.

Dans le but d'augmenter le taux de rotation des avions, il est nécessaire que le transfert des bagages entre l'avion et l'aérogare soit réalisé dans des temps les plus courts possibles et avec des moyens les moins coûteux possibles.

Ainsi, on achemine habituellement les bagages sur des bandes transporteuses elles-mêmes guidées en translation sur des plates-formes de transfert notamment, et ce, sur au moins des portions du chemin de convoyage qui s'étend depuis la zone d'enregistrement jusqu'à l'avion. Ces bandes transporteuses sont, soit formées de tronçons rectilignes, disposés bout à bout et inclinés l'un par rapport à l'autre pour les portions de chemin de convoyage non rectilignes, chacun des tronçons présentant une bande entraînée par un cylindre d'entraînement, soit formées d'une seule bande constituée de plaques aptes à pivoter les unes par rapport aux autres selon un même plan, et entraînées ensemble le long d'un parcours non nécessairement rectiligne.

Cependant, la mise en oeuvre de tels dispositifs ne peut se faire de manière continue entre ladite zone d'enregistrement et la soute d'un avion, compte tenu de la distance qui peut les séparer. Par conséquent, des opérations de manutention sont nécessaires pour transférer les bagages sur un chariot qui est conduit ensuite jusqu'à l'avion où les bagages sont à nouveau transférés à la main, du chariot à la soute. Ces opérations de transfert, sont à la fois, pénibles, longues et coûteuses. De plus, les bagages sont convoyés de manière relativement anarchique sur ces bandes transporteuses de telle sorte que l'espace disponible n'est pas occupé de façon optimale.

Un problème qui se pose et que vise à résoudre la présente invention est alors de fournir une installation, qui..permette non seulement d'automatiser le convoyage des bagages mais aussi de limiter l'espace nécessaire au traitement de ces bagages.

Pour atteindre ce but, la présente invention propose, selon un premier aspect, un procédé de traitement automatique des bagages individuels à main entre deux aires de stockage, les bagages présentant respectivement une embase surmontée de deux flancs latéraux opposés, lesdits bagages étant adaptés à reposer à l'équilibre en appui sur leur embase, lesdits bagages étant transférés d'une aire de stockage à l'autre par l'intermédiaire d'une plateforme longitudinale de transfert, ladite plateforme longitudinale de transfert étant adaptée à supporter lesdits bagages ; le procédé selon l'invention comprend les étapes suivantes : on forme, sur l'une desdites aires de stockage, des rangées de bagages en appui sur leur embase, les bagages de chacune desdites rangées étant appliqués, les uns contre les autres flanc contre flanc et selon une direction sensiblement normale auxdits flancs ; on entraîne séquentiellement, selon une première direction, chacune desdites rangées en translation sur ladite plateforme longitudinale de transfert de façon que chacune desdites rangées de bagages s'étendent longitudinalement sur ladite plateforme; et, on entraîne chacune desdites rangées de bagages supportée par ladite plateforme, en translation selon une seconde direction sensiblement perpendiculaire à ladite première direction pour transférer lesdites rangées de bagages sur l'autre aire de stockage.

Ainsi, une caractéristique de l'invention réside dans le mode de mise en oeuvre des bagages à main en rangées, flanc contre flanc, qui permet ensuite d'entraîner séquentiellement les bagages en translation par bloc, selon deux directions perpendiculaires. De la sorte, les bagages par bloc, sont susceptibles d'être transférés d'une plate-forme de transfert, à une plate-forme de réception, et inversement, sans intervention humaine et dans un espace relativement restreint puisque les bagages sont regroupés en appui les uns contre les autres.

Selon un mode de mise en oeuvre de l'invention particulièrement avantageux, ladite première direction est sensiblement perpendiculaire aux flancs des bagages de ladite rangée, tandis que ladite seconde direction est sensiblement parallèle aux flancs des bagages de ladite rangée, de telle sorte que les rangées de bagages sont entraînées en translation sur la plate-forme de transfert à l'une de ses extrémités et selon une direction parallèle à ladite plate-forme, ladite rangée de bagages s'étendant alors sur toute la longueur de ladite plate-forme.

En outre, ladite autre aire de stockage est située dans un avion et ladite une desdites aires de stockage est située en dehors dudit avion, de telle sorte que ladite plate-forme de transfert étant située en travers dans la soute de l'avion, elle est adaptée à recevoir depuis l'extérieur de l'avion, lesdites rangées de bagages selon ladite première direction, pour que lesdites rangées soient ensuite entraînées dans ladite soute transversalement par rapport à ladite plate-forme de transfert et auxdites rangées.

Par ailleurs, et de manière préférée, lesdits bagages présentant deux parois de tranche opposées reliant respectivement lesdits flancs latéraux, lesdites deux parois de tranche et lesdits flancs latéraux étant surmontés d'une paroi de préhension opposée à ladite embase, on forme lesdites rangées de bagages les unes au-dessus des autres et à distance en laissant libre ladite paroi de préhension et au moins l'une desdites parois de tranche de chacun desdits bagages, de façon à, d'une part pouvoir entreposer manuellement lesdits bagages et former lesdites rangées et d'autre part et inversement, pouvoir retirer manuellement lesdits bagages de ladite rangée. Au surplus, on apparie lesdites rangées de bagages de telle manière que les parois de tranche des bagages des rangées appariées soient étendues en regard, de façon à, comme on l'expliquera dans la suite de la description, pouvoir entraîner séquentiellement lesdites rangées appariées et augmenter plus encore la vitesses de transfert des bagages et aussi pour rationaliser l'espace occupé par lesdits bagages.

Selon un autre aspect, la présente invention propose une installation de traitement automatique des bagages individuels à main entre deux aires de stockage, les bagages présentant respectivement une embase surmontée de deux flancs latéraux opposés, lesdits bagages étant adaptés à reposer à l'équilibre en appui sur leur embase, lesdits bagages étant transférés d'une aire de stockage à l'autre par l'intermédiaire d'une plateforme longitudinale de transfert, ladite plateforme longitudinale de transfert étant adaptée à supporter lesdits bagages ; selon l'invention, ladite installation comprend : des moyens pour former des rangées de bagages en appui sur leur embase, sur l'une desdites aires de stockage, les bagages de chacune desdites rangées étant appliqués, les uns contre les autres flanc contre flanc et selon une direction sensiblement normale auxdits flancs ; des moyens pour entraîner séquentiellement, selon une première direction, chacune desdites rangées en translation sur ladite plateforme longitudinale de transfert, de façon que chacune desdites rangées de bagages s'étendent longitudinalement sur ladite plateforme; et, des moyens pour entraîner chacune desdites rangées de bagages supportée par ladite plateforme, en translation selon une seconde direction sensiblement perpendiculaire à ladite première direction pour transférer lesdites rangées de bagages sur l'autre aire de stockage.

Ainsi, selon cet autre aspect, une caractéristique de l'invention réside dans le mode de coopération des moyens, qui permettent tout d'abord de former les rangées de bagages sur l'une des aires de stockage, par exemple située en dehors d'un avion, puis de les entraîner dans une première direction sur la plate-forme longitudinale de transfert, pour ensuite les entraîner à nouveau, dans une seconde direction perpendiculaire à la première, en dehors de ladite plate-forme de transfert vers l'autre aire de stockage, par exemple située à l'intérieur dudit avion. Une telle installation, se prête en outre à une automatisation complète du transfert des bagages d'un aérogare à un avion.

Selon un autre mode de mise en oeuvre de l'invention particulièrement avantageux, lesdits bagages présentant deux parois de tranche opposées reliant respectivement lesdits flancs latéraux, lesdites deux parois de tranche et lesdits flancs latéraux étant surmontés d'une paroi de préhension opposée à ladite embase, ladite installation comprend un bâti d'entreposage pour former lesdites rangées de bagages les unes au-dessus des autres et à distance en laissant libre ladite paroi de préhension et au moins l'une desdites parois de tranche de chacun desdits bagages. Ainsi, grâce au bâti d'entreposage, situé par exemple en appui sur le sol dans ladite une des aires de stockage en dehors de l'avion, les bagages sont susceptibles d'être entreposés manuellement en appui flanc contre flanc et selon des rangées, par exemple par des porteurs de bagages eux-mêmes. De la sorte, les bagages sont entreposés rationnellement et manuellement par les porteurs, de manière à pouvoir être traités ensuite de manière automatique sans intervention humaine, et notamment de manière à être transférés à l'intérieur de la soute de l'avion par rangées, après que le bâti d'entreposage a été porté auprès de l'avion au moyen d'un véhicule automobile. Par ailleurs, et comme on l'expliquera dans la suite de la description, les bagages pourront être retirés aisément par les opérateurs eux-mêmes, dans cette même position après qu'ils auront été transférés automatiquement par rangées, cette fois, de la soute vers un autre bâti d'entreposage identique, après l'atterrissage de l'avion.

En outre, et de façon particulièrement avantageuse, ledit bâti d'entreposage s'étend selon un axe longitudinal et comprend, au moins deux étages superposés et au moins une baie latérale libre, des bagages étant susceptibles d'être entreposés manuellement flanc contre flanc, à travers ladite baie sur lesdits étages de telle manière que les flancs desdits bagages soient sensiblement perpendiculaires audit axe et de façon à former lesdites rangées. De la sorte, les deux étages, étant espacé l'un de l'autre d'une distance sensiblement supérieure à celle des bagages, et le premier étage étant lui étendu près du sol, les porteurs de bagages peuvent sans peine à travers la baie ouverte, installer leurs bagages pour former les rangées. Un troisième étage peut par exemple être prévu pour entreposer d'autres rangées de bagages et ainsi rationaliser plus encore l'espace occupé au sol.

De plus, et selon un mode préféré, ledit bâti d'entreposage comprend de chaque côté, deux baies latérales libres et opposées, des bagages étant susceptibles d'être entreposés manuellement à travers chacune desdites baies de chaque côté du bâti d'entreposage en appariant lesdites rangées.

Selon une caractéristique avantageuse de l'invention, l'installation comprend des moyens d'entraînement longitudinal pour entraîner lesdites rangées sensiblement perpendiculairement aux flancs des bagages desdites rangées, notamment pour entraîner lesdites rangées vers et sur ladite plate-forme de transfert selon une direction parallèle à cette dernière, lesdits moyens d'entraînement longitudinal étant adaptés à entraîner lesdites rangées de bagages selon ladite première direction. On notera, que ces moyens d'entraînement longitudinal permettent également d'entraîner les rangées initialement supporter par ladite plate-forme, en translation en dehors de ladite plate-forme.

Selon une variante de réalisation, lesdits moyens d'entraînement longitudinal comprennent au moins deux bandes transporteuses sensiblement parallèles et espacées l'une de l'autre, sur lesquelles les rangées de bagages sont susceptibles de devenir prendre appui, tous les bagages desdites rangées étant simultanément en portée sur les deux bandes transporteuses.

Selon une autre caractéristique avantageuse de l'invention, ladite installation comprend des moyens d'entraînement transversal pour entraîner lesdites rangées transversalement, lesdits moyens d'entraînement transversal étant adaptés à entraîner lesdites rangées de bagages selon ladite seconde direction qui est sensiblement perpendiculaire à ladite plate-forme. Alors que lesdits moyens - d'entraînement longitudinal sont essentiellement adaptés à entraîner les rangées de bagages, entre l'extérieur de la soude d'un avion et la plate-forme de transfert qui est logée à l'intérieur, et inversement, les moyens de transfert transversal, sont eux adaptés à entraîner les rangées de bagages entre la plate-forme de réception située à l'intérieur de la soute et la plate-forme de transfert et inversement.

Selon une variante, les moyens d'entraînement transversal comprennent des moyens d'entraînement rotatifs adaptés à venir en prise dans lesdites embases pour entraîner simultanément chacun des bagages de ladite rangée de bagages de manière à entraîner globalement toute la rangée initialement formée ; la rangée de bagages restant alors intègre. Par exemple, lesdites embases comprennent une portion dentée rectiligne et lesdits moyens d'entraînement rotatifs comportent des pignons moteurs adaptés à engrener dans ladite portion dentée rectiligne. De la sorte, les pignons moteurs qui sont directement liés à l'embase, commandent les bagages en translation de façon rigide.

En outre, lesdits bagages présentant avantageusement une épaisseur identique, ladite plateforme de transfert est équipée d'une pluralité de moyens d'entraînement rotatifs espacés longitudinalement et consécutivement les uns des autres, d'une distance correspondant à ladite épaisseur de manière à ce que, ladite rangée de bagages puisse être en appui sur la plate-forme de transfert dans une position telle que chacun desdits bagages de ladite rangée puissent être entraîné respectivement chacun par un moyen d'entraînement rotatif pour ainsi entraîner ladite rangée transversalement. Pour ce faire, et de manière préférentielle lesdits moyens d'entraînement rotatifs de ladite pluralité de moyens d'entraînement rotatifs sont reliées ensemble par un seul arbre d'entraînement commun.

Par ailleurs, et selon un mode de réalisation de l'invention particulièrement avantageux, l'installation conforme à l'invention comprend en outre, des palettes de transfert adaptées à recevoir lesdites rangées de bagages, lesdites palettes de transfert étant montées mobiles en translation dans ledit bâti d'entreposage de façon à non plus entraîner une seule rangée mais deux rangées parallèles appariées, ce qui permet d'une part d'augmenter les vitesses de traitement desdites rangées, et au surplus, de s'affranchir éventuellement des variations de dimension entre les bagages de chacune desdites rangées. Bien évidemment, ces palettes de transfert sont adaptées à être entraînées en translation du bâti d'entreposage vers la plate-forme de transfert située à l'intérieur de la soute, puis de la plate-forme de transfert à la plate-forme de réception selon une direction sensiblement perpendiculaire.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en perspective d'un bagage adapté à une installation selon un premier mode de mise en oeuvre de l'invention ;
- la Figure 2 est une vue schématique partielle en perspective représentant le bagage illustré sur la Figure 1 selon un autre angle de vue ;
- la Figure 3 est une vue schématique partielle montrant un élément complémentaire adapté à coopérer avec ledit bagage ;
- la Figure 4 est une vue schématique partielle en perspective de dessus d'une première installation conforme à l'invention ;
- la Figure 5 est une vue schématique partielle en perspective d'une seconde installation conforme à l'invention ; et,
- la Figure 6 est une vue schématique partielle en perspective illustrant les première et seconde installations représentées sur les figures 4 et 5. '
- La Figure 7 est une vue schématique de détail en perspective, d'une installation conforme à l'invention selon un autre mode de mise en oeuvre ;
- la Figure 8 est une vue schématique partielle en perspective d'une installation selon l'autre mode de mise en oeuvre ;
- la Figure 9 est une vue schématique en perspective de détail de l'invention illustrée sur la Figure 8, selon une variante d'exécution ;
- la Figure 10 est une vue schématique en perspective d'un autre détail selon la variante d'exécution précitée ; et,
- la Figure 11 est une vue schématique en perspective d'encore un autre détail selon ladite variante d'exécution précitée.

On notera que certaines références sont composés d'un nombre affecté d'un signe prime : «'». Ces références correspondent tout simplement à des éléments fonctionnellement équivalents et mis en oeuvre dans des modes de réalisation différents.

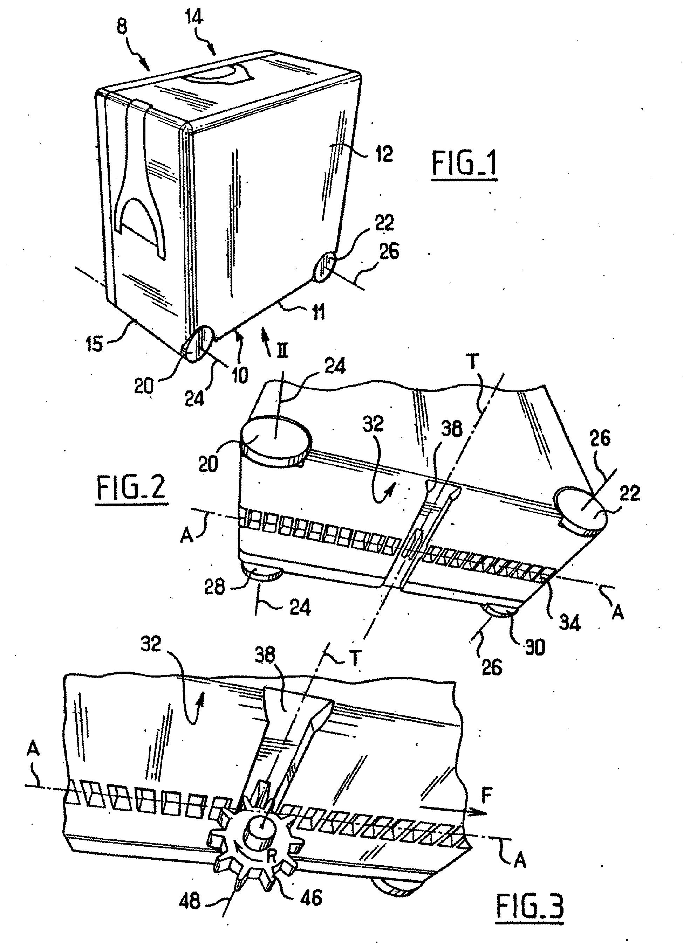

La Figure 1 montre un bagage parallélépipédique rectangle 8 adapté à être traité dans une installation conforme à l'invention. Le bagage 8 présente une embase 10 surmontée par deux flancs latéraux opposés s'étendant longitudinalement selon une longueur 11, un premier flanc latéral 12 apparaissant sur la Figure 1 et un second flanc latéral 14 masqué, les deux flancs latéraux 12, 14 sensiblement parallèles entre eux étant espacés l'un de l'autre selon une épaisseur 15 du bagage 8. En outre, apparaissent également sur la Figure 1, dans une partie inférieure du bagage, deux portées d'appui formées de deux premiers organes de roulement 20, 22 montés à rotation dans deux coins de l'embase 10 selon deux axes transversaux 24, 26 respectifs. Les deux autres coins de l'embase 10 comprennent symétriquement deux seconds organes de roulement, 28, 30, respectivement coaxiaux des premiers organes de roulement, 20, 22 et que l'on trouve illustrés sur la Figure 2, à laquelle on se référera maintenant.

Cette Figure 2 montre le bagage en vue de dessous selon la flèche Il représentée sur la Figure 1 et plus complètement l'embase 10. Cette embase 10 présente une face d'appui 32 de laquelle font saillie les premiers et seconds organes de roulement 20, 22, 28, 30 dans ses quatre coins.

En outre, et c'est là une caractéristique de l'invention, une portion dentée rectiligne 34 ou crémaillère, est formée dans la face d'appui 32 de l'embase 10 longitudinalement selon un axe de symétrie A, parallèlement et équidistante des deux flancs latéraux 12,14. Cette portion dentée rectiligne 34, qui s'étend sur toute la longueur de la face d'appui 32, est formée en ménageant des lumières 36 régulièrement espacées les unes des autres selon l'axe de symétrie A. Ainsi, cette crémaillère 34 est orientée selon une direction correspondant à la direction selon laquelle le bagage est susceptible d'être entraîné en translation sur une surface déterminée grâce aux quatre organes de roulement 20, 22, 28, 30, en appui sur cette surface déterminée, puisque leurs deux axes transversaux 24, 26 sont perpendiculaires à l'axe A de la crémaillère 34.

En outre, une rainure transversale 38 d'axe transversale T, est ménagée perpendiculairement à la crémaillère 34 et à distance égale des deux axes transversaux 24, 26.

On se référera maintenant à la Figure 3 pour décrire plus précisément la fonction de la crémaillère 34 précitée. On retrouve sur cette Figure 3 partiellement l'embase 10 et sa face d'appui 32 dans laquelle sont ménagées, la crémaillère 34 et la rainure transversale 38. Par ailleurs, un pignon moteur 46 est représenté en prise dans la crémaillère 34 au niveau de la rainure transversale 38. Ce pignon moteur 46, dont les moyens d'entraînement ne sont pas représentés, présente un axe de rotation 48 orienté perpendiculairement à l'axe de symétrie A de la crémaillère 34. De la sorte, le pignon moteur 46 est adapté à entraîner le bagage en translation selon l'axe de symétrie A dans le sens de la flèche F lorsque le pignon moteur 46 est entraîné en rotation dans le sens de rotation R des aiguilles d'une montre ou dans un sens opposé si le pignon moteur 46 est entraîné en rotation dans un sens inverse.

Ainsi, lorsque que le bagage est disposé sur une surface déterminée, en appui sur ses organes de roulement 20, 22, 28, 30, la face d'appui 32 de l'embase 10 est espacée de ladite surface déterminée, de sorte que les efforts à produire pour entraîner en translation le bagage sur cette surface perpendiculairement aux axes transversaux 24, 26 sont relativement faibles. De la sorte, en installant un pignon moteur 46 sous ladite surface déterminée de façon que son axe de rotation 48 y soit parallèle, mais dont les dents sont adaptées à venir en saillie de cette surface afin de venir en prise dans la crémaillère 34, on réalise des moyens d'entraînement mécaniques permettant d'entraîner les bagages en translation à moindre coût énergétique.

Selon l'exemple illustré sur cette Figure 3, le pignon moteur 46 présente dix dents et il est dimensionné de façon que seules deux dents puissent venir en prise simultanément dans la crémaillère 34. De la sorte, le bagage, est susceptible d'être entraîné en translation selon l'axe transversal T de la rainure transversale 38, sur ladite surface déterminée et parallèlement à l'axe de rotation 48 du pignon moteur 46 afin que deux dents du pignon moteur 46 puissent coulisser librement dans la rainure transversale 38 de part et d'autre de la dent centrale 44 et respectivement entre les deux bords opposés 40, 42 de la rainure transversale 38. Ainsi, le bagage est adapté à être entraîné librement en translation selon l'axe transversal T sans que le pignon moteur 46 ne puisse venir le bloquer.

Cependant, et c'est là un avantage de l'invention, lorsque que le bagage est arrêté dans une position dans laquelle le pignon moteur 46 s'étend dans l'axe de symétrie A de la crémaillère 34, l'entraînement en rotation du pignon moteur 46 provoque alors l'entraînement du bagage, le pignon moteur 46 engrenant alors dans la crémaillère 34.

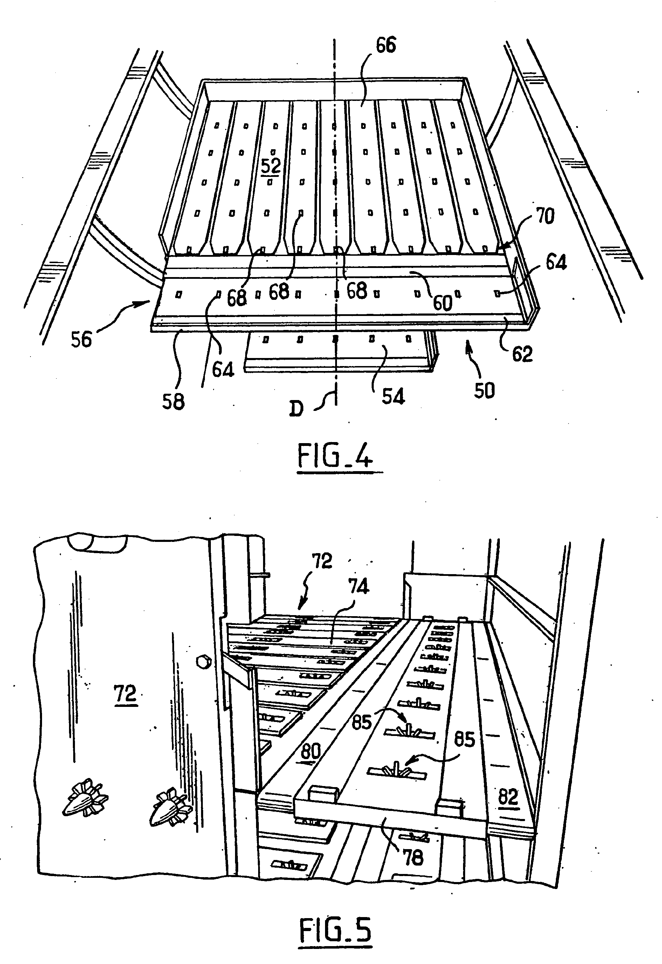

On se référera maintenant à la Figure 4 afin de décrire une première installation conforme à l'invention. Cette première installation est montée dans la soute 50 d'un avion afin de pouvoir la charger de façon automatique, notamment avec des bagages du type précité.

La soute 50 est divisée en deux niveaux superposés, un niveau supérieur 52 et un niveau inférieur 54 et l'avion présente une ouverture latérale 56 permettant de la charger.

Suivant l'axe de l'ouverture latéral 56, l'installation comprend une plate-forme longitudinale de transfert 58 équipée de deux bandes transporteuses 60, 62 sensiblement parallèles entre elles et espacées l'une de l'autre, d'une distance correspondant à la distance qui sépare les deux axes transversaux 24, 26 des paires d'organes de roulement 20, 28 et 22, 26, du bagage 8 précité. De la sorte, les bagages sont susceptibles d'être supportés en travers par la plate-forme 58 de telle façon que leur plus grande longueur 11 soit orientée selon l'axe de l'avion D perpendiculairement aux bandes transporteuses 60, 62. De cette façon, la paire d'organes de roulement 20, 28 d'axe transversal 24 est en appui sur l'une des bandes transporteuses 60, tandis que l'autre paire d'organes de roulement 22, 30 d'axe transversal 26 est en appui sur l'autre bande transporteuses 62.

En outre, la plate-forme de transfert 58 est équipée de moyens d'entraînement rotatifs formés ici de pignons moteurs 64 analogues au pignon moteur 46 représenté sur la Figure de 3, et montés alignés entre les deux bandes transporteuses 60, 62 et régulièrement espacé les uns des autres d'une distance correspondant à l'épaisseur 15 des bagages ; les pignons moteurs 64 étant tous solidaires d'un arbre d'entraînement non représenté et étendu parallèlement aux bandes transporteuses 60, 62 dans l'épaisseur de la plate-forme de transfert 58. Les pignons moteurs 64 s'étendent alors en saillie de la plate-forme de transfert 58 entre les bandes transporteuses 60, 62.

Ainsi, les bagages sont susceptibles d'être entraînés en translation grâce aux bandes transporteuses 60, 62, elles-mêmes entraînées simultanément à la même vitesse sans que la face d'appui 32 des bagages ne puissent venir en frottement contre une autre surface, car non seulement la face d'appui 32 est maintenu écartée de la plate-forme de transfert 58 grâce aux organes de roulement 20, 22, 28, 30, mais aussi, la rainure transversale 38 des bagages autorise le passage des dents des pignons moteurs 64 comme cela a déjà été expliqué en référence à la Figure 3.

Par ailleurs, cette première installation comporte en outre une plate-forme de réception 66 qui borde la plate-forme de transfert 58 et qui se prolonge dans la soute 50 de l'avion perpendiculairement à la plate-forme de transfert 58.

Cette plate-forme de réception 66, est équipée d'une pluralité d'organes d'entraînement 68 formant pignons également, alignés dans le prolongement de chacun des pignons moteurs 64 selon une direction parallèle à l'axe de l'avion D et perpendiculaire au plan de transporteuses 60, 62. Ces organes d'entraînement 68 étant espacés les uns des autres et pour la première rangée 70, des pignons moteurs 64, selon l'axe.de l'avion D d'une distance correspondant à la longueur 11 des bagages.

Ainsi, cette longueur qui correspond également sensiblement à la longueur de la crémaillère 34 de chacun des bagages permet aux bagages d'être toujours en prise dans les pignons moteurs 64 ou dans les organes d'entraînement 68. De la sorte, tous les bagages disposés en rangées comme on l'expliquera ci-après, sont susceptibles d'être entraînés en translation longitudinale grâce aux bandes transporteuses 60, 62 sur la plate-forme de transfert 58.

On a représenté sur la Figure 5 une seconde installation conforme à l'invention qui permet-elle de charger des chariots de transfert de bagages. Cette seconde installation comprend des moyens d'entraînement analogue à la première installation.

Cette Figure 5 illustre partiellement un chariot 72, lequel comprend une seconde plate-forme de réception 74 équipée de rangées de seconds organes d'entraînement 76. Par ailleurs, une seconde plate-forme de transfert 78 vient border la plate-forme de réception 74. De façon identique, la seconde plate-forme de transfert 78 comporte des secondes bandes transporteuses parallèles 80, 82 et des seconds pignons moteurs 85 entre les secondes bandes transporteuses 80, 82, espacés d'une distance correspondant à l'épaisseur 15 d'un bagage.

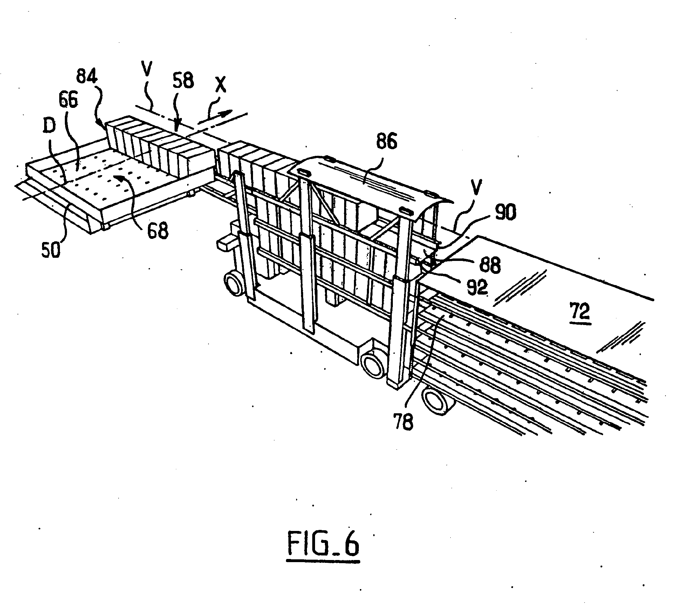

On se référera maintenant, à la Figure 6 qui illustrent les deux installations précitées coopérant ensemble pour assurer le transfert de rangées de bagages entre le chariot 72 et la soute 50 d'un avion.

On retrouve sur la Figure 6 de façon schématique la soute 50 d'un avion, dans laquelle est logée la plate-forme de réception 66 et une rangée de bagages 84 en appui sur la plate-forme de réception 66, en bordure de la plate-forme de transfert 58 qu'elle masque. La rangée de bagages 84 est susceptible d'être entraînée en translation, transversalement, grâce aux organes d'entraînement 68, sur la plate-forme de transfert 58 selon l'axe de l'avion D dans le sens de la flèche X.

Par ailleurs, la Figure 6 illustre un chargeur 86, entre le chariot 72 et la soute 50, présentant une plate-forme de transit 88 structurellement analogue à la plate-forme de transfert 58 et qui est équipée uniquement de deux bandes transporteuses parallèles 90, 92 sans pignon. Cette plate-forme de transit 88 est ajustée dans le prolongement de la plate-forme de transfert 58 située elle dans la soute 50 de l'avion afin de recevoir les rangées de bagages en translation longitudinalement, et est adaptée à entraîner les rangées de bagages 84 sur la seconde plate-forme de transfert 78. Les rangées de bagages sont bien entendu entraînées longitudinalement grâce aux bandes transporteuses selon une direction V sensiblement perpendiculaire à l'axe de l'avion D.

Les bandes transporteuses 90, 92 permettent alors d'entraîner les rangées de bagages longitudinalement dans le chariot 72 précité.

On notera que les installations fonctionnent également dans un mode de chargement de la soute de l'avion, en inversant le sens d'entraînement des bandes transporteuses, des moyens moteurs et des organes d'entraînement.

Le mode de mise en oeuvre de l'installation de traitement automatique précité permet de traiter et transférer des bagages présentant une portion dentée rectiligne apte à venir en prise dans des pignons moteurs à dents. Toutefois, on prévoit selon un autre mode de mise en oeuvre de remplacer non seulement les pignons moteurs et les organes d'entraînement précités, mais aussi les bandes transporteuses, par des galets moteurs adaptés à venir en prise par friction dans une portion rectiligne de l'embase d'un bagage.

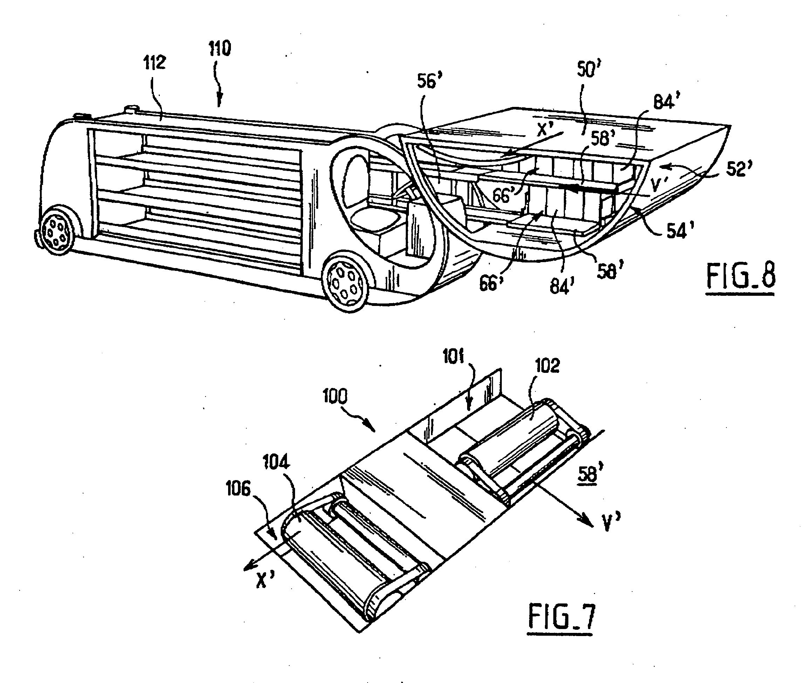

On pourra se référer à la figure 7, laquelle illustre des éléments d'entraînement 100 permettant de remplacer les pignons moteurs et les bandes transporteuses. Ces éléments d'entraînement 100, présentent un premier galet pivotant 102 dans une position inactive, logée à l'intérieur d'un premier logement ouvert 101 pratiqué dans une plate-forme de transfert 58', et un second galet pivotant 104 également dans une position inactive mais perpendiculaire au premier 102, logé lui à l'intérieur d'un second logement ouvert 106 pratiqué dans ladite plate-forme de transfert 58' au voisinage du premier logement ouvert 101. Lorsque le premier galet pivotant 102 est porté dans une position active, tandis que le second galet pivotant 104 demeure dans sa position inactive, non seulement il vient affleurer la surface de la plate-forme de transfert 58' mais au surplus il est entraîné en rotation, dans un sens ou dans un autre, pour entraîner ici selon une direction longitudinale V' un bagage dont l'embase en appui sur la plate-forme de transfert 58' recouvre entièrement les deux éléments d'entraînement 100 et vient en contact avec le premier galet pivotant 102. Par ailleurs, lorsque le second galet pivotant 104 est à son tour porté dans une position active, le premier galet pivotant 102 restant dans sa position inactive, il permet d'entraîner en translation un bagage en appui, selon une direction transversale X' perpendiculaire à la direction longitudinale V'. Ainsi, en équipant une plate-forme de transfert 58' avec une pluralité d'éléments d'entraînement 100, correspondant à une pluralité de bagages d'une rangée de bagages en appui sur la plate-forme de transfert 58', ladite rangée, est susceptible d'être entraînée en translation, soit dans une direction longitudinale, parallèle à la plate-forme de transfert 58', soit dans une direction transversale, perpendiculaire à ladite plate-forme de transfert 58'.

En outre, et selon un autre mode de mise en oeuvre de l'invention, illustré sur la Figure 8, le chariot 72 et le chargeur 86 illustrés sur la Figure 6 sont regroupés en un seul véhicule automobile 110 adapté à charger et à décharger les bagages par rangées. Ce véhicule automobile 110 est équipé d'un bâti d'entreposage amovible 112 adapté à recevoir les rangées de bagages.

On retrouve sur cette figure 8, de façon schématique et partielle une soute d'un avion 50', présentant un niveau supérieur 52' et un niveau inférieur 54' ainsi qu'une ouverture latérale 56' permettant le chargement et le déchargement. On y retrouve également une plate-forme longitudinale de transfert 58' pour chacun des niveaux 52' et 54', et des rangées de bagages 84' déjà installés dans la soute 50', sur chaque niveau 52', 54' et en appui sur des plates-formes de réception 66' que bordent les plates-formes de transfert 58'. Ces dernières sont équipées d'éléments d'entraînement 100 précités, et les plates-formes de réception 66' sont équipées également de galet d'entraînement n'apparaissant pas sur la Figure 8.

Ainsi, les rangées de bagages 84' sont ici susceptibles d'être entraînées en translation selon une direction transversale X' sur la plate-forme de transfert 58' puis selon une direction longitudinale perpendiculaire V' dans le bâti d'entreposage 112.

Lorsqu'ici, la soute de l'avion 50' est entièrement déchargée, et que le bâti d'entreposage 112 est entièrement rempli, le véhicule automobile 110 est susceptible d'être déplacé vers un aérogare pour déposer le bâti d'entreposage 112 sur le sol dans un endroit où des passagers peuvent reprendre leurs bagages y reposant, et ce dans une position identique à celle dans laquelle ils les avaient déposés.

Par ailleurs, selon encore un autre mode de mise en oeuvre, les bagages sont transférés et installés dans la soute d'un avion par conteneurs. Ces conteneurs sont alors similaires au chariot 72 illustré sur la Figure 5 et ils sont directement chargés dans la soute de l'avion.

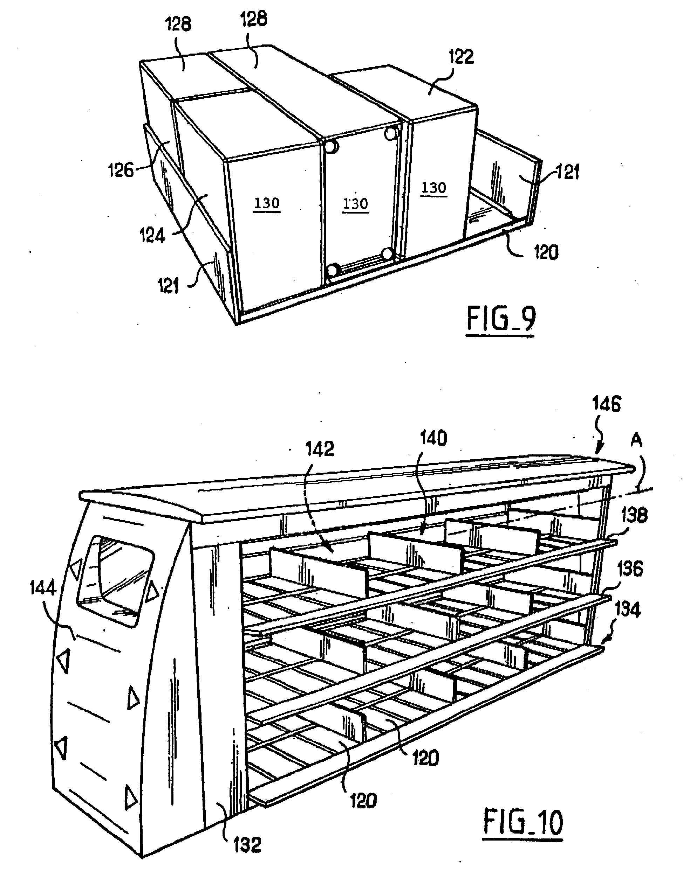

Selon une variante, illustrée sur la Figure 9, l'installation conforme à l'invention comprend en outre, une pluralité de palettes de transfert 120 bordées par deux rebords opposés 121 et adaptées respectivement à recevoir des bagages 122 selon deux rangées appariées 124,126. Les bagages 122, présente en outre une paroi de préhension supérieure 128, et deux parois de tranche 130. Les bagages des deux rangées ici appariées 126, 124 présentent l'une de leurs parois de tranche 130 et leur paroi de préhension supérieure 128, libres.

Selon cette même variante, les palettes de transfert sont, dans un mode de mise en oeuvre non représenté, dépourvues de rebord opposé, en revanche elles sont équipées de moyens permettant d'y solidariser les bagages en rangées. Ces moyens présentent notamment, des rainures et des nervures adaptées à coopérer avec l'embase des bagages pour les bloquer en translation par rapport à la palette de transfert, tandis que lesdits bagages présentent eux des moyens d'encliquetage verrouillables, adaptés à venir en prise dans ladite palette de transfert, pour les rendre solidaire de cette palette. En outre, ces moyens d'encliquetage sont susceptibles d'être verrouillés au moyen d'une serrure à clé ou à commande magnétique, de manière à ce que seul le détenteur de la clé ou du badge magnétique correspondant à ladite serrure puisse retirer le bagage.

On a représenté sur la Figure 10 un bâtis d'entreposage 132 adapté à recevoir une pluralité de palettes de transfert 120 sur trois étages superposés, un étage inférieur 134, un étage intermédiaire 136 et un étage supérieur 138. Les palettes de transfert 120 sont montées mobiles en translation dans ledit bâti d'entreposage 132 selon un axe longitudinal A, tandis que les étages superposés 134, 136, 138, sont eux, montés mobiles en translation verticalement perpendiculairement à l'axe longitudinal A. En outre, le bâti d'entreposage 132 présente deux baies latérales ouvertes et opposées, 140, 142, une partie arrière 144 fermée et une partie avant 146 ouverte, à travers laquelle les palettes de transfert 120 vont pouvoir être entraînées en translation.

Ainsi, des bagages sont susceptibles d'être entreposés manuellement flanc contre flanc, à travers chacune desdites baies 140, 142, de chaque côté du bâti d'entreposage 132 et à l'intérieur des palettes de transfert 120 sur lesdits étages superposés 134, 136, 138, de telle manière que les flancs desdits bagages soient perpendiculaires à l'axe longitudinal A et de façon à former lesdites rangées. De la sorte, les trois étages 134, 136, 138, étant espacés l'un de l'autre d'une distance sensiblement supérieure à celle des bagages, et l'étage inférieur 134 étant lui étendu près du sol, les porteurs de bagages peuvent sans peine à travers les baies ouvertes 140, 142, installer leurs bagages pour former les rangées, sur les trois étages superposés 134, 136, 138.

De plus, selon le mode de mise en oeuvre précité et non représenté, dans lequel les palettes de transfert sont dépourvues de rebord, mais en revanche, équipées de moyens permettant d'encliqueter les bagages, ces derniers peuvent être verrouillés par les porteurs de bagages eux-mêmes et simultanément être enregistrés électroniquement. Pour ce faire, les bagages sont équipés de moyens électroniques de stockage d'information pour stocker en particulier un identifiant, et ces moyens électroniques de stockage sont prolongés par des premiers moyens de connexion. Le bâti d'entreposage quant à lui, présente un réseau filaire terminé par des seconds moyens de connexion adaptés à coopérer avec chacun des premiers moyens de connexion des bagages, par exemple venir en contact, lorsqu'ils sont verrouillés sur la palette de transfert ; le réseau filaire étant relié à un terminal informatique. Ainsi, lorsque le porteur du bagage est enregistré, simultanément le bagage qui lui correspond et qui est alors verrouillé sur une palette de transfert, lui est associé en temps réel. De la sorte, à chaque bagage verrouillé sur les palettes de transfert, correspond un porteur de bagage enregistré, et à chaque porteur de bagage enregistré correspond au moins un bagage verrouillé sur les palettes de transfert.

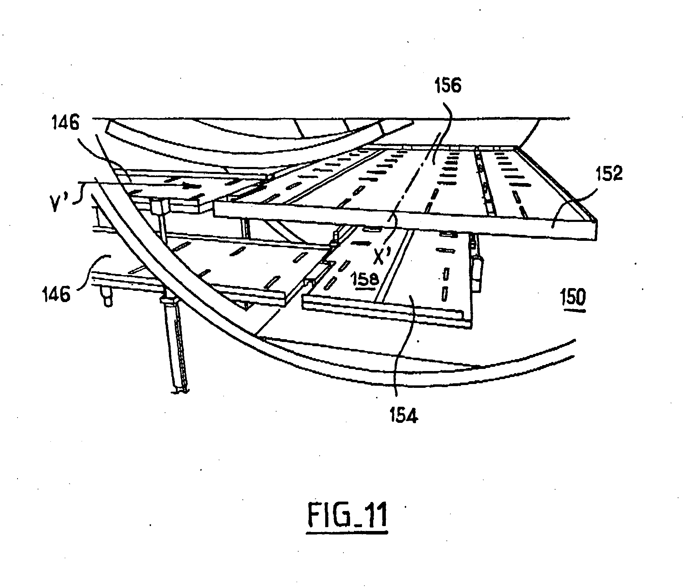

Ces palettes de transfert 120 sont adaptées à être entraînées en translation du bâti d'entreposage 132 vers les plates-formes de transfert 120 situées à l'intérieur d'une soute par le biais de plate-formes de transit 146 que l'on trouve illustrées sur la Figure 11. On retrouve sur cette figure 11, illustrant partiellement la soute 150 d'un avion, des plates-formes de transfert, supérieure 152 et inférieure 154 bordant respectivement, des plates-formes de réception, supérieure 156 et inférieur 158.

Ainsi, les palettes de transfert 120, contenant des rangées de bagages appariés, sont susceptibles d'être entraînées en translation sur les plates-formes de transit 146, selon une direction longitudinale V', correspondant à l'axe longitudinal A du bâti d'entreposage 132 que prolonge ces plates-formes de transit 146 puis sur les plates-formes de transfert 152, 154 pour ensuite être entraînées en translation dans une direction transversale X' perpendiculaire à la direction longitudinale V', sur les plates-formes de réception 156, 158.

Bien évidemment, le cheminement inverse des palettes de transfert 120, de la soute 150 vers le bâti d'entreposage 132 est mis en oeuvre lorsque l'avion est déchargé à l'atterrissage.

## Revendications

1. Procédé de traitement automatique des bagages (8) individuels à main entre deux aires de stockage, les bagages présentant respectivement une embase (10) surmontée de deux flancs latéraux (12,14) opposés, lesdits bagages étant adaptés à reposer à l'équilibre en appui sur leur embase, lesdits bagages étant transférés d'une aire de stockage à l'autre par l'intermédiaire d'une plateforme (58,78) longitudinale de transfert, ladite plateforme longitudinale de transfert étant adaptée à supporter lesdits bagages;
**caractérisé en ce qu'**il comprend les étapes suivantes :
- on forme, sur l'une desdites aires de stockage, des rangées de bagages en appui sur leur embase, les bagages de chacune desdites rangées étant appliqués, les uns contre les autres flanc contre flanc et selon une direction sensiblement normale auxdits flancs ;
- on entraîne séquentiellement, selon une première direction, chacune desdites rangées en translation sur ladite plateforme longitudinale de transfert de façon que chacune desdites rangées de bagages s'étendent longitudinalement sur ladite plateforme; et,
- on entraîne chacune desdites rangées de bagages supportée par ladite plateforme, en translation selon une seconde direction sensiblement perpendiculaire à ladite première direction pour transférer lesdites rangées de bagages sur l'autre aire de stockage.

2. Procédé de traitement automatique des bagages selon la revendication 1, **caractérisé en ce que** ladite première direction est sensiblement perpendiculaire aux flancs des bagages de ladite rangée, tandis que ladite seconde direction est sensiblement parallèle aux flancs des bagages de ladite rangée.

3. Procédé de traitement automatique des bagages selon la revendication 1 ou 2, **caractérisé en ce que** ladite autre aire de stockage est située dans un avion et ladite une desdites aires de stockage est située en dehors dudit avion.

4. Procédé de traitement automatique des bagages selon l'une quelconque des revendications 1 à 3, **caractérisé en ce que**, lesdits bagages présentant deux parois de tranche opposées reliant respectivement lesdits flancs latéraux, lesdites deux parois de tranche et lesdits flancs latéraux étant surmontés d'une paroi de préhension opposée à ladite embase, on forme lesdites rangées de bagages les unes au-dessus des autres et à distance en laissant libre ladite paroi de préhension et au moins l'une desdites parois de tranche de chacun desdits bagages.

5. Procédé de traitement automatique des bagages selon la revendication 4, **caractérisé en ce qu'**on apparie lesdites rangées de bagages de façon que les parois de tranche des bagages des rangées appariées soient étendues en regard.

6. Procédé de traitement automatique des bagages selon la revendication 5, **caractérisé en ce qu'**on entraîne séquentiellement lesdites rangées appariées.

7. Installation de traitement automatique des bagages (8) individuels à main entre deux aires de stockage, les bagages présentant respectivement une embase (10) surmontée de deux flancs latéraux (12,14) opposés, lesdits bagages étant adaptés à reposer à l'équilibre en appui sur leur embase, lesdits bagages étant transférés d'une aire de stockage à l'autre par l'intermédiaire d'une plateforme (58,78) longitudinale de transfert, ladite plateforme longitudinale de transfert étant adaptée à supporter lesdits bagages ;
**caractérisée en ce qu'**elle comprend :
- des moyens pour former des rangées de bagages en appui sur leur embase, sur l'une desdites aires de stockage, les bagages de chacune desdites rangées étant appliqués, les uns contre les autres flanc contre flanc et selon une direction sensiblement normale auxdits flancs ;
- des moyens (60,62; 80,82) pour entraîner séquentiellement, selon une première direction, chacune desdites rangées en translation sur ladite plateforme longitudinale de transfert, de façon que chacune desdites rangées de bagages s'étendent longitudinalement sur ladite plateforme; et,
- des moyens (64,78) pour entraîner chacune desdites rangées de bagages supportée par ladite plateforme, en translation selon une seconde direction sensiblement perpendiculaire à ladite première direction pour transférer lesdites rangées de bagages sur l'autre aire de stockage.

8. Installation de traitement automatique des bagages selon la revendication 7, **caractérisée en ce que** ladite autre aire de stockage est située dans un avion et ladite une desdites aires de stockage est située en dehors dudit avion.

9. Installation de traitement automatique des bagages selon la revendication 7 ou 8, **caractérisée en ce que**, lesdits bagages présentant deux parois de tranche opposées reliant respectivement lesdits flancs latéraux, lesdites deux parois de tranche et lesdits flancs latéraux étant surmontés d'une paroi de préhension opposée à ladite embase, ladite installation comprend un bâti d'entreposage pour former lesdites rangées de bagages les unes au-dessus des autres et à distance en laissant libre ladite paroi de préhension et au moins l'une desdites parois de tranche de chacun desdits bagages.

10. Installation de traitement automatique des bagages selon la revendication 9, **caractérisée en ce que** ledit bâti d'entreposage s'étend selon un axe longitudinal et comprend, au moins deux étages superposés et au moins une baie latérale libre, des bagages étant susceptibles d'être entreposés manuellement flanc contre flanc, à travers ladite baie sur lesdits étages de façon que les flancs desdits bagages soient sensiblement perpendiculaires audit axe de façon à former lesdites rangées.

11. Installation de traitement automatique des bagages selon la revendication 10, **caractérisée en ce que** ledit bâti d'entreposage comprend deux baies latérales libres et opposées, des bagages étant susceptibles d'être entreposés manuellement à travers chacune desdites baies pour apparier lesdites rangées.

12. Installation de traitement automatique des bagages selon l'une quelconque des revendications 7 à 11, **caractérisée en ce qu'**elle comprend des moyens d'entraînement longitudinal pour entraîner lesdites rangées sensiblement perpendiculairement aux flancs des bagages desdites rangées, lesdits moyens d'entraînement longitudinal étant adaptés à entraîner lesdites rangées de bagages selon ladite première direction.

13. Installation de traitement automatique des bagages selon la revendication 12, **caractérisée en ce que** lesdits moyens d'entraînement longitudinal (60, 62 ; 80, 82) comprennent au moins deux bandes transporteuses sensiblement parallèles et espacées l'une de l'autre.

14. Installation de traitement automatique des bagages selon l'une quelconque des revendications 7 à 13, **caractérisée en ce qu'**elle comprend des moyens d'entraînement transversal pour entraîner lesdites rangées transversalement, lesdits moyens d'entraînement transversal étant adaptés à entraîner lesdites rangées de bagages selon ladite seconde direction.

15. Installation de traitement automatique des bagages selon la revendication 14, **caractérisée en ce que** lesdits moyens d'entraînement transversal comprennent des moyens d'entraînement rotatifs (64, 85) adaptés à venir en prise dans lesdites embases (10) pour entraîner simultanément chacun des bagages de ladite rangée de bagages.

16. Installation de traitement automatique des bagages selon l'une quelconque des revendications 7 à 15, **caractérisée en ce que** lesdites embases (10) comprennent une portion dentée rectiligne (34) et **en ce que** lesdits moyens d'entraînement rotatifs (64, 85) comportent des pignons moteurs adaptés à engrener dans ladite portion dentée rectiligne (34).

17. Installation de traitement automatique des bagages selon l'une quelconque des revendications 7 à 16, **caractérisée en ce que**, lesdits bagages (8) présentant une épaisseur (15) identique, ladite plate-forme de transfert (58, 78) est équipée d'une pluralité de moyens d'entraînement rotatifs (64, 85) espacés longitudinalement et consécutivement les uns des autres, d'une distance correspondant à ladite épaisseur.

18. Installation de traitement automatique des bagages selon la revendication 17, **caractérisée en ce que**, lesdits moyens d'entraînement rotatifs (64, 85) de ladite pluralité de moyens d'entraînement rotatifs sont reliées ensemble par un seul arbre d'entraînement commun.

19. Installation de traitement automatique des bagages selon l'une quelconque des revendications 7 à 14, **caractérisée en ce qu'**elle comprend en outre, des palettes de transfert adaptées à recevoir lesdites rangées de bagages, lesdites palettes de transfert étant montées mobiles en translation dans ledit bâti d'entreposage.

## Claims

1. Method for the automatic processing of individual items of hand-held luggage (8) between two storage areas, the items of luggage respectively having a base (10) surmounted by two opposite lateral flanks (12, 14), said luggage being adapted to rest in a balanced manner supported on its base, said luggage being transferred from one storage area to the other via a longitudinal transfer platform (58, 78), said longitudinal transfer platform being adapted to support said luggage;
**characterised in that** it comprises the following steps:
- in one of said storage areas rows of luggage supported on its base are formed, the items of luggage of each of said rows being placed one against the other, flank-to-flank and in a direction substantially normal to said flanks;
- each of said rows is driven sequentially in translation in a first direction on said longitudinal transfer platform such that each of said luggage rows extends longitudinally on said platform; and
- each of said luggage rows supported by said platform is driven in translation in a second direction substantially perpendicular to said first direction to transfer said luggage rows to the other storage area.

2. Method for the automatic processing of luggage as claimed in Claim 1,
**characterised in that** said first direction is substantially perpendicular to the flanks of the luggage of said row, whereas said second direction is substantially in parallel with the flanks of the luggage of said row.

3. Method for the automatic processing of luggage as claimed in Claim 1 or 2,
**characterised in that** said other storage area is located in an aeroplane and said one of said storage areas is located outside of said aeroplane.

4. Method for the automatic processing of luggage as claimed in any one of Claims 1 to 3, **characterised in that** since said luggage has two opposite edge walls respectively connecting said lateral flanks, said two edge walls and said lateral flanks being surmounted by a gripping wall opposite said base, said luggage rows are formed one above the other and at a mutual spaced disposition leaving said gripping wall and at least one of said edge walls of each of said items of luggage free.

5. Method for the automatic processing of luggage as claimed in Claim 4,
**characterised in that** said luggage rows are paired together such that the edge walls of the luggage of the paired rows face each other.

6. Method for the automatic processing of luggage as claimed in Claim 5,
**characterised in that** said paired rows are driven sequentially.

7. Installation for the automatic processing of individual items of hand-held luggage (8) between two storage areas, the items of luggage respectively having a base (10) surmounted by two opposite lateral flanks (12, 14), said luggage being adapted to rest in a balanced manner supported on its base, said luggage being transferred from one storage area to the other via a longitudinal transfer platform (58, 78), said longitudinal transfer platform being adapted to support said luggage;
**characterised in that** it comprises:
- means for forming, in one of said storage areas, rows of luggage supported on its base, the items of luggage of each of said rows being placed one against the other, flank-to-flank and in a direction substantially normal to said flanks;
- means (60, 62; 80, 82) for driving each of said rows sequentially in translation in a first direction on said longitudinal transfer platform such that each of said luggage rows extends longitudinally on said platform; and
- means (64, 85) for driving each of said luggage rows supported by said platform in translation in a second direction substantially perpendicular to said first direction to transfer said luggage rows to the other storage area.

8. Installation for the automatic processing of luggage as claimed in Claim 7,
**characterised in that** said other storage area is located in an aeroplane and said one of said storage areas is located outside of said aeroplane.

9. Installation for the automatic processing of luggage as claimed in Claim 7 or 8,
**characterised in that** since said luggage has two opposite edge walls respectively connecting said lateral flanks, said two edge walls and said lateral flanks being surmounted by a gripping wall opposite said base, said installation comprises a storage frame to form said luggage rows one above the other and at a mutual spaced disposition leaving said gripping wall and at least one of said edge walls of each of said items of luggage free.

10. Installation for the automatic processing of luggage as claimed in Claim 9,
**characterised in that** said storage frame extends along a longitudinal axis and comprises at least two superposed stages and at least one free lateral opening, the luggage being able to be manually stowed flank-to-flank through said opening on said stages such that the flanks of said luggage are substantially perpendicular to said axis so as to form said rows.

11. Installation for the automatic processing of luggage as claimed in Claim 10,
**characterised in that** said storage frame comprises two opposite, free lateral openings, the luggage being able to be manually stowed through each of said openings to pair said rows together.

12. Installation for the automatic processing of luggage as claimed in any one of Claims 7 to 11, **characterised in that** it comprises longitudinal drive means for driving said rows substantially perpendicular to the flanks of the luggage of said rows, said longitudinal drive means being adapted to drive said luggage rows in said first direction.

13. Installation for the automatic processing of luggage as claimed in Claim 12,
**characterised in that** said longitudinal drive means (60, 62; 80, 82) comprise at least two conveyor belts which are substantially in parallel with and spaced apart from each other.

14. Installation for the automatic processing of luggage as claimed in any one of Claims 7 to 13, **characterised in that** it comprises transverse drive means for driving said rows transversely, said transverse drive means being adapted to drive said luggage rows in said second direction.

15. Installation for the automatic processing of luggage as claimed in Claim 14,
**characterised in that** said transverse drive means comprise rotary drive means (64, 85) adapted to come into engagement in said bases (10) for simultaneously driving each of the items of luggage in said luggage row.

16. Installation for the automatic processing of luggage as claimed in any one of Claims 7 to 15, **characterised in that** said bases (10) comprise a straight toothed portion (34), and **in that** said rotary drive means (64, 85) have drive pinions adapted to engage in said straight toothed portion (34).

17. Installation for the automatic processing of luggage as claimed in any one of Claims 7 to 16, **characterised in that** since said items of luggage (8) have an identical thickness (15), said transfer platform (58, 78) is fitted with a plurality of rotary drive means (64, 85) which are spaced apart from each other longitudinally and consecutively by a distance which corresponds to said thickness.

18. Installation for the automatic processing of luggage as claimed in Claim 17,
**characterised in that** said rotary drive means (64, 85) of said plurality of rotary drive means are connected together by a single common drive shaft.

19. Installation for the automatic processing of luggage as claimed in any one of Claims 7 to 14, **characterised in that** it further comprises transfer pallets adapted to receive said luggage rows, said transfer pallets being mounted such that they can move in translation in said storage frame.

## Patentansprüche

1. Verfahren zur automatischen Handhabung von individuellen Hand-Gepäckstücken (8) zwischen zwei Lagerflächen, wobei die Gepäckstücke jeweils eine Basis (10) aufweisen, welche von zwei gegenüberliegenden, seitlichen Flanken bzw. Seitenflächen (12, 14) überragt wird, wobei die Gepäckstücke adaptiert sind, um im Gleichgewicht auf ihrer Basis aufzuruhen, wobei die Gepäckstücke von einer Lagerfläche bzw.
- ebene zur anderen mittels einer länglichen Transferplattform (58, 78) transferiert werden, wobei die längliche Transferplattform adaptiert wird, um die Gepäckstücke zu unterstützen bzw, zu tragen;
**dadurch gekennzeichnet, daß** es die folgenden Schritte umfaßt:
- Ausbilden auf einer der Lagerflächen von Gepäckreihen in Anlage auf ihrer Basis, wobei die Gepäckstücke von jeder dieser Reihen eines gegen das andere Flanke an Flanke und entsprechend einer Richtung angeordnet werden, die im wesentlichen normal auf die genannten Flanken bzw. Seiten ist;
- sequentielle Mitnahme gemäß einer ersten Richtung von jeder dieser Reihen in einer Translationsbewegung auf der länglichen Transferplattform, so daß sich jede dieser Gepäckreihen in Längsrichtung auf der Plattform erstreckt; und
- Mitnahme von jeder dieser Gepäckreihen, die durch die Plattform unterstützt werden, zu einer Translationsbewegung entlang einer zweiten Richtung im wesentlichen senkrecht auf die erste Richtung, um die Gepäckreihen auf die andere Lagerebene zu transferieren.

2. Automatisches Handhabungsverfahren für Gepäckstücke nach Anspruch 1, **dadurch gekennzeichnet, daß** die erste Richtung im wesentlichen senkrecht auf die Seiten bzw. Flanken der Gepäckstücke der Reihe liegt, während die zweite Richtung im wesentlichen parallel zu den Flanken der Gepäckstücke dieser Reihe liegt.

3. Automatisches Handhabungsverfahren für Gepäckstücke nach Anspruch 1 oder 2, **dadurch gekennzeichnet, daß** die andere Lagerebene bzw. -fläche in einem Flugzeug angeordnet wird und daß diese eine der Lagerflächen außerhalb des Flugzeugs angeordnet wird.

4. Automatisches Handhabungsverfahren für Gepäckstücke nach einem der Ansprüche 1 bis 3, **dadurch gekennzeichnet, daß**, wobei die Gepäckstücke zwei gegenüberliegende Schmalseiten aufweisen, welche die Seitenflanken verbinden, wobei die zwei Schmalseiten und die Seitenflanken von einer der Basis gegenüberliegenden Grifffläche bzw. -wand überlagert werden, die Gepäckreihen eine über den anderen und in einem Abstand ausgebildet werden, indem die Griffwand und wenigstens eine der Schmalseiten von jedem der Gepäckstücke freigelassen werden.

5. Automatisches Handhabungsverfahren für Gepäckstücke nach Anspruch 4, **dadurch gekennzeichnet, daß** die Gepäckreihen derart gepaart werden, daß sich die Schmalseiten der Gepäckstücke der gepaarten Reihen einander gegenüberliegend erstrecken.

6. Automatisches Handhabungsverfahren für Gepäckstücke nach Anspruch 5, **dadurch gekennzeichnet, daß** die gepaarten Reihen sequentiell mitgeführt bzw. mitgenommen werden.

7. Anlage zur automatischen Handhabung von individuellen Hand-Gepäckstücken (8) zwischen zwei Lagerflächen, wobei die Gepäckstücke jeweils eine Basis (10) aufweisen, die von zwei gegenüberliegenden Seitenflächen bzw, seitlichen Flanken (12, 14) der Gepäckstücke überlagert ist, wobei die Gepäckstücke adaptiert sind, um im Gleichgewicht in Anlage auf ihrer Basis aufzuruhen, wobei die Gepäckstücke von einer Lagerfläche bzw. -ebene zu einer anderen über eine längliche Transferplattform (58, 78) transferiert sind, wobei die längliche Transferplattform adaptiert ist, um die Gepäckstücke zu unterstützen bzw. zu tragen;
**dadurch gekennzeichnet, daß** sie umfaßt:
- Mittel, um Gepäckreihen in Anlage auf ihrer Basis auf einer dieser Lagerflächen auszubilden, wobei die Gepäckstücke von jeder dieser Reihen eines gegen das andere Flanke gegen Flanke und entlang einer Richtung im wesentlichen normal auf die Seitenflächen angeordnet sind;
- Mittel (60, 62; 80, 82), um sequentiell entlang einer ersten Richtung jede dieser Reihen in einer Translationsbewegung auf der länglichen Transferplattform derart mitzunehmen, daß sich jede dieser Gepäckstückreihen in Längsrichtung auf der Plattform erstreckt; und
- Mittel (64, 85), um jede dieser Gepäckstückreihen, die auf der Plattform abgestützt sind, in einer Translationsbewegung entlang einer zweiten Richtung im wesentlichen senkrecht auf die erste Richtung mitzunehmen, um die Reihen von Gepäckstücken auf die andere Lagerebene zu transferieren.

8. Anlage zur automatischen Handhabung von Gepäckstücken nach Anspruch 7, **dadurch gekennzeichnet, daß** die andere Lagerebene in einem Flugzeug angeordnet ist und daß die eine der Lagerebenen außerhalb des Flugzeugs angeordnet ist.

9. Anlage zur automatischen Handhabung von Gepäckstücken nach Anspruch 7 oder 8, **dadurch gekennzeichnet, daß** die Gepäckstücke zwei gegenüberliegende Schmalseiten aufweisen, die jeweils die Seitenflächen verbinden, wobei die zwei Schmalseiten und die zwei Seitenflächen von einer Grifffläche bzw. -wand überlagert sind, die der Basis gegenüberliegt, wobei die Anlage ein Zwischenteil bzw. Zwischengerüst umfaßt, um die Gepäckreihen eine über den anderen und in einem Abstand auszubilden, indem die Griff fläche und wenigstens eine der Schmalseiten von jedem der Gepäckstücke freigelassen sind.

10. Anlage zur automatischen Handhabung von Gepäckstücken nach Anspruch 9, **dadurch gekennzeichnet, daß** sich das Zwischengerüst entlang einer Längsachse erstreckt und wenigstens zwei übereinander gelagerte Etagen und wenigstens eine freie seitliche Öffnung aufweist, wobei die Gepäckstücke fähig sind, händisch Seitenfläche gegen Seitenfläche durch diese Öffnung auf den Etagen derart angeordnet zu werden, daß die Seitenflächen der Gepäckstücke im wesentlichen senkrecht auf die Achse liegen, um die Reihen auszubilden.

11. Anlage zur automatischen Handhabung von Gepäckstücken nach Anspruch 10, **dadurch gekennzeichnet, daß** das Zwischengerüst zwei seitliche freie und gegenüberliegende Öffnungen umfaßt, wobei die Gepäckstücke fähig sind, händisch durch jede dieser Öffnungen angeordnet zu werden, um die Reihen paarweise auszubilden.

12. Anlage zur automatischen Handhabung von Gepäckstücken nach einem der Ansprüche 7 bis 11, **dadurch gekennzeichnet, daß** sie längliche Mitnahmemittel umfaßt, um die im wesentlichen senkrecht auf die Seitenflächen der Gepäckstücke dieser Reihen angeordneten Reihen mitzunehmen, wobei die länglichen Mitnahmemittel adaptiert sind, die Gepäckstückreihen entlang der ersten Richtung mitzunehmen.

13. Anlage zur automatischen Handhabung von Gepäckstücken nach Anspruch 12, **dadurch gekennzeichnet, daß** die länglichen Mitnahmemittel (60, 62; 80, 82) wenigstens zwei Transportbänder umfassen, die im wesentlichen parallel und voneinander beabstandet sind.

14. Anlage zur automatischen Handhabung von Gepäckstücken nach einem der Ansprüche 7 bis 13, **dadurch gekennzeichnet, daß** sie Mittel für eine querverlaufende Mitnahme umfaßt, um die Reihen querverlaufend bzw. transversal mitzunehmen, wobei die Mittel für die querverlaufende Mitnahme adaptiert sind, die Gepäckstückreihen entlang der zweiten Richtung mitzunehmen.

15. Anlage zur automatischen Handhabung von Gepäckstücken nach Anspruch 14, **dadurch gekennzeichnet, daß** die Mittel für die querverlaufende Mitnahme rotierende bzw. drehbare Mitnahmemittel (64, 85) umfassen, die adaptiert sind, um in Eingriff in die Basen (10) zu gelangen, um simultan jedes der Gepäckstücke der Reihe von Gepäckstücken mitzunehmen.

16. Anlage zur automatischen Handhabung von Gepäckstücken nach einem der Ansprüche 7 bis 15, **dadurch gekennzeichnet, daß** die Basen (10) einen geradlinigen gezahnten Bereich bzw. Abschnitt (34) umfassen und daß die drehbaren Mitnahmemittel (64, 85) Motorritzel umfassen, die adaptiert sind, um in den geradlinig gezahnten Bereich (34) einzugreifen.

17. Anlage zur automatischen Handhabung von Gepäckstücken nach einem der Ansprüche 7 bis 16, **dadurch gekennzeichnet, daß**, wobei die Gepäckstücke (8) eine identische Dicke (15) aufweisen, die Transferplattform (58, 78) mit einer Mehrzahl von drehbaren Mitnahmemitteln (64, 85) ausgestattet ist, die in Längsrichtung und die einen den anderen folgend in einem der Dicke entsprechenden Abstand beabstandet sind.

18. Anlage zur automatischen Handhabung von Gepäckstücken nach Anspruch 17, **dadurch gekennzeichnet, daß** die drehbaren Mitnahmemittel (64, 85) der Mehrzahl von drehbaren Mitnahmemitteln auf einer einzigen gemeinsamen Antriebswelle angeordnet sind.

19. Anlage zur automatischen Handhabung von Gepäckstücken nach einem der Ansprüche 7 bis 14, **dadurch gekennzeichnet, daß** sie außerdem Transferpaletten umfaßt, die adaptiert sind, die Reihen von Gepäckstücken aufzunehmen, wobei die Transferpaletten beweglich zu einer Translationsbewegung auf dem Zwischengerüst angeordnet sind.
